# EUROPÄISCHE PATENTSCHRIFT

(11) **EP 1 974 599 B1**
(45) Veröffentlichungstag und Bekanntmachung des Hinweises auf die Patenterteilung: **27.10.2010**
(21) Anmeldenummer: 08004990.1
(22) Anmeldetag: 18.03.2008
(51) Int. Cl.: A01D 78/10

(54) **Heuwerbungsmaschine**
Haymaking Machine
Faneuse

(30) Priorität: 26.03.2007 DE 102007014909
(43) Veröffentlichungstag der Anmeldung: 01.10.2008
(73) Patentinhaber: CLAAS Saulgau GmbH, 88348 Bad Saulgau (DE)
(72) Erfinder: Geng, Manfred, 88348 Bad Saulgau (DE); Schelkle, Roland, 88348 Bad Saulgau (DE)

(56) Entgegenhaltungen:
- EP-A- 0 779 021
- EP-A- 1 527 673
- DE-U1- 20 317 209
- US-A1- 2006 059 881

## Beschreibung

Die Erfindung betrifft eine Heuwerbungsmaschine als Seitenschwader gemäß dem Oberbegriff des unabhängigen Anspruchs 1.

Die US 2006/059881 A1 beschreibt einen Dreikreisel-Seitenschwader, dessen größter Rechkreiseldurchmesser letztendlich durch die maximal zulässige Transportbreite des Fahrwerks begrenzt ist, sofern keine Zinkenarme für die Transportfahrt abgenommen werden sollen.

Die DE 203 17 2009 U1 beschreibt ebenfalls einen Dreikreisel-Seitenschwader mit einem aufwändig abgewinkelten Maschinenrahmen und einem an dessen rückwärtigen Ende angeschlossenen Fahrwerk. Alle drei Rechkreisel sind somit diesem Fahrwerk vorgelagert, welches zumindest keine optimalen Manöverier- und Transporteigenschaften sowohl in der Arbeits- als auch in der Transportstellung ermöglicht.

Der wachsende Wettbewerbsdruck auf dem Agrarsektor der Grünfutterernte verlangt ständig nach leistungsfähigeren Maschinen mit größeren Arbeitsbreiten, insbesondere für den überbetrieblichen Einsatz, z.B. für Lohnunternehmer. Da das Zeitfenster zur Futterbergung insbesondere witterungsbedingt oft sehr schmal ist, richtet sich die Forderung hinsichtlich der Leistungsfähigkeit nicht nur an große Arbeitsbreiten sondern gleichzeitig auch an kurze Transportzeiten während der Straßenfahrt, aber auch ebenso an kurze Rüstzeiten auf dem Feld.

Letzteres bedeutet, dass sich der Kreiselschwader nach erfolgter Straßenfahrt auf dem Feld aus der Transportstellung schnell und ohne Manipulationen außerhalb des Führerstands des Zugfahrzeugs in die Betriebsstellung überführen lassen soll.

Kurze Transportzeiten erheben die Forderung nach hohen Geschwindigkeiten etwa im Bereich von 40 bis 60 km/h und daran gebunden gute und sichere Fahreigenschaften, d.h. eine hohe Fahrstabilität derartiger Maschinen, insbesondere bei Kurvenfahrten. Dieses verlangt zum einen nach einer kompakten Bauform der Maschine, welche sich zudem in das zulässige Straßentransportprofil einfügen muss, und damit insbesondere auch die Forderung nach einer geringen Baulänge der Maschine mit möglicht günstiger Schwerpunktslage in Bezug auf das Fahrwerk.

Aus der US 2006/0059881A1 ist ein Kreiselschwader mit drei Rechkreiseln ausgebildet als Seitenschwader bekannt, dessen letzter Rech- bzw. Schwadkreisel sich hinter dem Fahrwerk befindet und der zur Überführung in die Transportstellung zunächst um eine aufrechte Achse in Richtung des deichselbildenden Längsholms und dann um eine horizontale Achse nach oben verklappt wird. Dabei legt der Schwadkreiseldurchmesser des letzten Schwadkreisels die maximale Transportbreite fest.

Die DE 20317209 U1 zeigt ebenfalls einen Kreiselschwader mit drei Rechkreiseln ausgebildet als Seitenschwader, Dabei ist das Fahrwerk hinter dem letzten Schwadkreisel angeordnet, welches die Gesamtlänge des Gespanns verlängert.

Die Aufgabe dieser Erfindung ist es daher, einen gezogenen Seitenschwader als 3-Kreiselschwader mit großen Rechkreiseldurchmessern in Bezug zu maximal zulässigen Straßentranaportabmessungen zu schaffen, wobei zur Überführung des Kreiselschwaders von dessen Arbeitsstellung In dessen Transportstellung keine Zinkenarme abgebaut werden müssen, um die maximale Transporthöhe nicht zu überschreiten, wobei die Baulänge des Seitenschwaders möglichst gering sein soll, und wobei das dynamische Fahrverhalten insgesamt, aber Insbesondere In Kurvenfahrten, bei hohen Geschwindigkeiten verbessert werden soll.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüche, der Beschreibung und den Figurendarstellungen zu entnehmen.

Der Rechkreisel 6 aufnehmende Ausleger 9 ist in Fahrtrichtung F vorzugsweise vor der Stützradachse 35 des Fahrwerks 4 angeordnet, welches einerseits eine bessere Lastverteilung im Sinne der Entlastung der zugfahrzeugseitigen Aufnahme der Deichselstützlast und andererseits das Nachlaufverhalten des Kreiselschwaders dadurch günstig beeinflusst, dass der Radstand relativ zur hinteren Achse des Zugfahrzeugs kürzer ist, welches ein spurtreueres Nachlaufverhalten gegenüber dem Zugfahrzeug mit sich bringt als ein weiter zurück liegendes Fahrwerk.

Des Weiteren verursacht die Ausgestaltung der Verklappung des hinteren Rechkreisels 6 eine etwa gleichmäßige Lastverteilung auf die beiden Stützräder 5 des Fahrwerks 4, indem der hintere Rechkreisel 6 in der Transportstellung zumindest einen Teil des Raums zwischen und oberhalb der Laufrädern 5 einnimmt. Dieses gilt auch für die Anordnung der vorderen und hinteren Rechkreisel 7,8, beidseits der vertikalen Längsmittelebenen 22.

Um eine möglichst kurze Maschinenlänge 26 zu erreichen, werden die Rechkreisel 6,7,8 in Bezug auf die Fahrtrichtung hinsichtlich de Abstände 18,19,19', möglichst eng zueinander angeordnet. Die besonders vorteilhaften Ausgestaltung der Erfindung ermöglicht es, das Abstandsmaß 19,19' so festzulegen, dass dieses kleiner als der Durchmesser des Konturenkreises ist, wobei die Reihenfolge des Verklappens des mittleren und hinteren Rechkreisels 6,7 so abläuft, dass die Reihenfolge beim Hochklappen in die Transportposition vom mittleren Rechkreisel 7 und hinteren Rechkreisel 6 so abläuft, dass der hintere Rechkreisel 6 zeitlich gesehen vor dem Rechkreisel 7 hochgeklappt wird und das Herunterklappen des mittleren Rechkreisel 7 und des hinteren Rechkreisels 6 in die Arbeitsposition so abläuft, dass der hintere Rechkreisel 6 zeitlich gesehen nach dem Rechkreisel 7 heruntergeklappt wird.

Durch die erfinderische Ausgestaltung dieses 3-Kreiselschwaders ist es möglich bei einem Straßentransportprofil von 3m Breite, 4m Höhe und 12m Länge Rechkreisel mit einem Durchmesser von 3,80 m zu realisieren, ohne dass dazu fahrerseitig Manipulationen erforderlich sind, die ein Verlassen des Fahrersitzes beim Umstellen von Transportstellung in Arbeitsstellung oder umgekehrt erforderlich machen.

Weiterhin ermöglicht die erfinderische Ausgestaltung eine symmetrische geradlinige Erstreckung des deichselbildenden Längsträgers abgestützt auf dem Fahrgestell derart, dass die vertikale Längsmittelebene die Symmetrieachse des Fahrgestells bildet, die zugleich durch die Hochachse des Vertikalgelenks als Zugpunkt der Kupplungseinrichtung zum Anschluss an das Zugfahrzeug verläuft.

Dieses ermöglicht nicht nur eine großzügige Dimensionierung des Fahrwerks mit entsprechend breiten und im Durchmesser großen luftbereiften Stützrädern, sonder auch, dass diese Stützräder sowohl in der Arbeitsfahrt als auch in der Transportfahrt stets symmetrisch zum Zugpunkt und damit zur Hochachse des Vertikalgelenks laufen, so dass die Räder keinen unnötigen Querkräften ausgesetzt sind und diese damit ein kräftearmes und spurtreues Lenkverhalten aufweisen.

Nähere Einzelheiten der Erfindung sind den nachfolgenden Figurendarstellungen und deren Beschreibungen zu entnehmen.

Es zeigen:
- Fig. 1: zeigt ein Ausführungsbeispiel der Erfindung dargestellt am Beispiel eines gezogenen Kreiselschwaders in einer Draufsicht in Arbeitsstellung.
- Fig. 2: zeigt ein weiteres Ausführungsbeispiel der Erfindung dargestellt am Beispiel eines gezogenen Kreiselschwaders in einer Draufsicht in Arbeitsstellung.
- Fig. 3: zeigt den Kreiselschwader gemäß Fig.2 in einer Draufsicht in einer Zwischenstellung zur Überführung in die Transportstellung
- Fig. 4: zeigt den Kreiselschwader gemäß Fig.1 in einer Draufsicht mit hochgeklappten hinteren Rechkreiseln in dessen Transportstellung.
- Fig.5: zeigt den Kreiselschwader gemäß Fig.2 in einer Draufsicht mit hochgeklappten hinteren Rechkreiseln in dessen Transportstellung.
- Fig. 6: zeigt den Kreiselschwader gemäß Fig.1 in einer Draufsicht in Transportstellung.
- Fig. 7: zeigt den Kreiselschwader gemäß Fig.2 in einer Draufsicht in Transportstellung.
- Fig. 8: zeigt den hinteren Rechkreisel gemäß Fig.2 in der noch nicht endgültig abgesenkten Transportstellung in einer Ansicht von hinten mit Blickrichtung in Fahrtrichtung gesehen.
- Fig. 8a: zeigt den hinteren Rechkreisel gemäß Fig.8 eingerahmt durch die Grenzen eines gedachten Straßentransportprofils, welches zugleich durch eine Schraffur gekennzeichnet ist.
- Fig. 9: zeigt den hinteren Rechkreisel gemäß Fig.8 in der endgültigen abgesenkten Transportstellung.
- Fig. 9a: zeigt den hinteren Rechkreisel gemäß Fig.9 eingerahmt durch die Grenzen eines gedachten Straßentransportprofils, welches zugleich durch eine Schraffur gekennzeichnet ist.
- Fig.10: zeigt den Seitenschwader gemäß Fig.1 in einer Seitenansicht in der endgültigen Transportstellung.
- Fig.11: zeigt den Seitenschwader gemäß Fig.2 in einer Seitenansicht in der endgültigen Transportstellung.

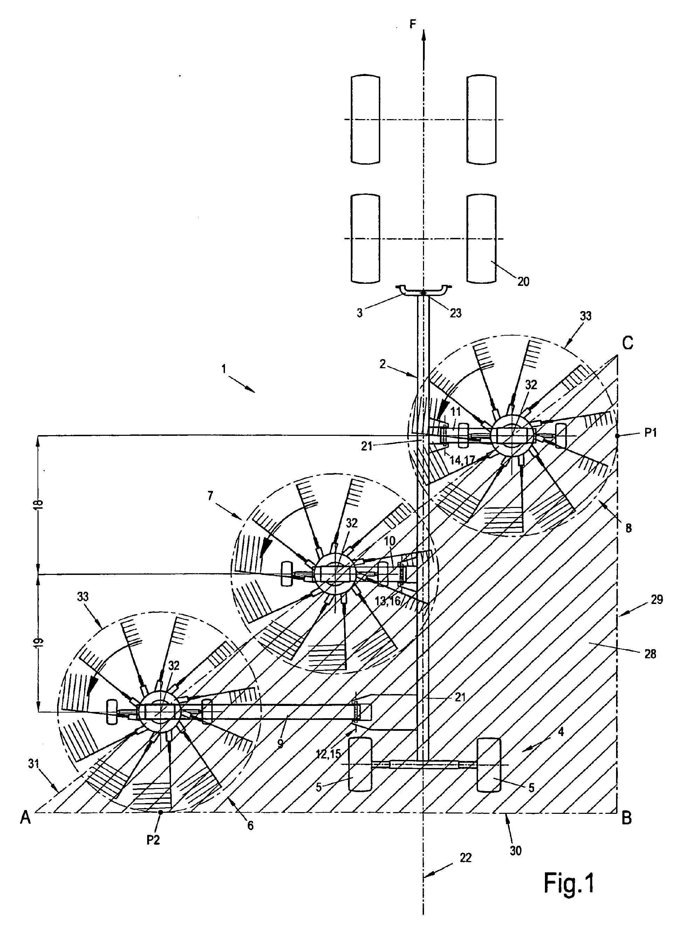

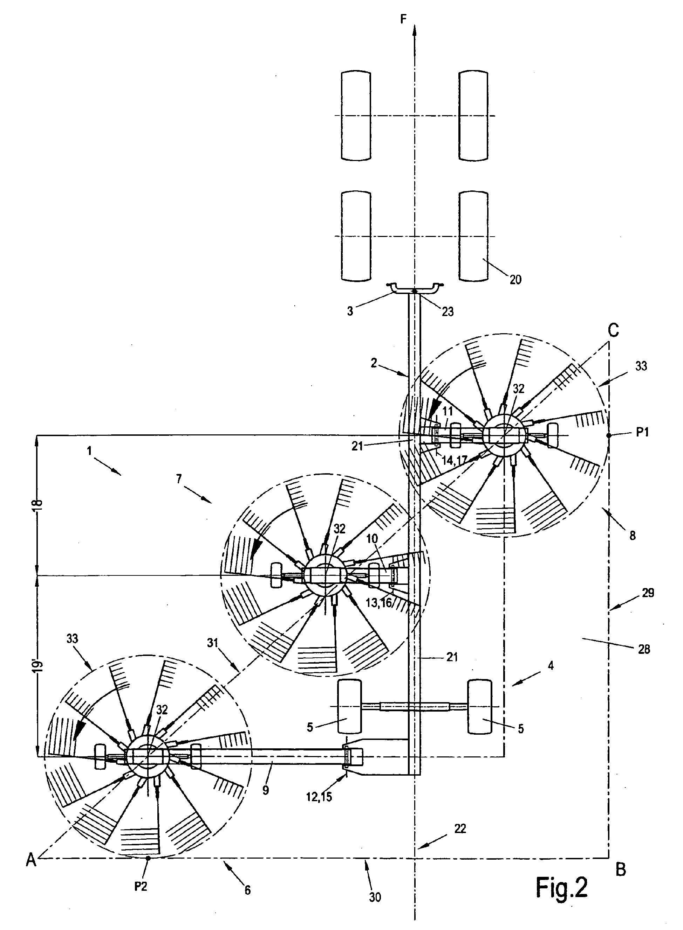

**Fig.1** und **Fig.2** zeigen Ausführungsbeispiele der Erfindung dargestellt an gezogenen Kreiselschwadern 1 als Seitenschwader mit drei Rechkreiseln 6,7,8 in einer Draufsicht in Arbeitsstellung. Fig.1 zeigt den Seitenschwader 1 mit einem Fahrwerk 4 hinter dem Ausleger 9 des letzten Rechkreisels 6 und Fig.2 zeigt den Seitenschwader 1 mit einem Fahrwerk 4 vor dem Ausleger 9 des letzten Rechkreisels 6. Der jeweilige Rechkreisel 6,7,8 ist höhenbeweglich mittels seines Auslegers 10,11,12 in einem Klappgelenk 15,16,17 mit den Klappachsen 12,13,14 an dem Fahrgestell 2, welches im Wesentlichen aus dem deichselbildenden Längsträger 21, einem Fahrwerk 4 mit zwei zueinander beabstandeten Stützrädern 5 und einer Kupplungsvorrichtung 3 besteht, angelenkt. Die Kupplungseinrichtung 3 dient zur Ankupplung des Seitenschwaders 1 an die Zugeinrichtung des Zugfahrzeugs 20 und wird von diesem gleichzeitig auch von einer Zapfwelle angetrieben. Der deichselbildende Längsträger 21 und die Kupplungseinrichtung 3 sind mittels eines Vertikalgelenks 23 mit dessen Hochachse untereinander verbunden, so dass der Seitenschwader 1 als gezogener Kreiselschwader sich in seinem Nachlaufverhalten abgestützt auf seinem Fahrwerk 4 gegenüber dem Zugfahrzeug wie ein gezogener Einachsanhänger verhält.

Die Rechkreisel stützen sich in der Arbeitsstellung durch ein eigenes bodenkopierendes Fahrwerk in bekannter weise am Boden ab. Die Rechkreisel 6,7,8 mit ihren durch Kurvenbahnen gesteuerten Zinkenarmen werden um ihre Kreiselachsen 32 umlaufend in Richtung der Drehrichtungspfeile angetrieben, wobei der vordere Rechkreisel 8 sein Rechgut an den mittleren Rechkreisel 7 und dieser das so zusammengerechte Rechgut an den hinteren Rechkreisel 6 übergibt, welcher dann einen Großschwad parallel zu seiner außenliegenden Fahrtrichtungstangente seines Konturkreises 33 ablegt. Der in Fahrtrichtung vorgelagerte erste Rechkreisel 8 befindet sich auf der einen Seite des deichselbildenden Längsträgers, bzw. der einen Seite der vertikalen Längsmittelebene 22 des Zugfahrzeugs 20, wohingegen die übrigen, der mittlere Rechkreisel 7 und der hintere Rechkreisel 6, sich auf der anderen Seite des deichselbildenden Längsträgers, bzw. der vertikalen Längsmittelebene 22 befinden. Längs der Fahrtrichtung F sind die Rechkreisel durch Abstandsmaße 18,19 bzw. 18',19' zueinander beabstandet.

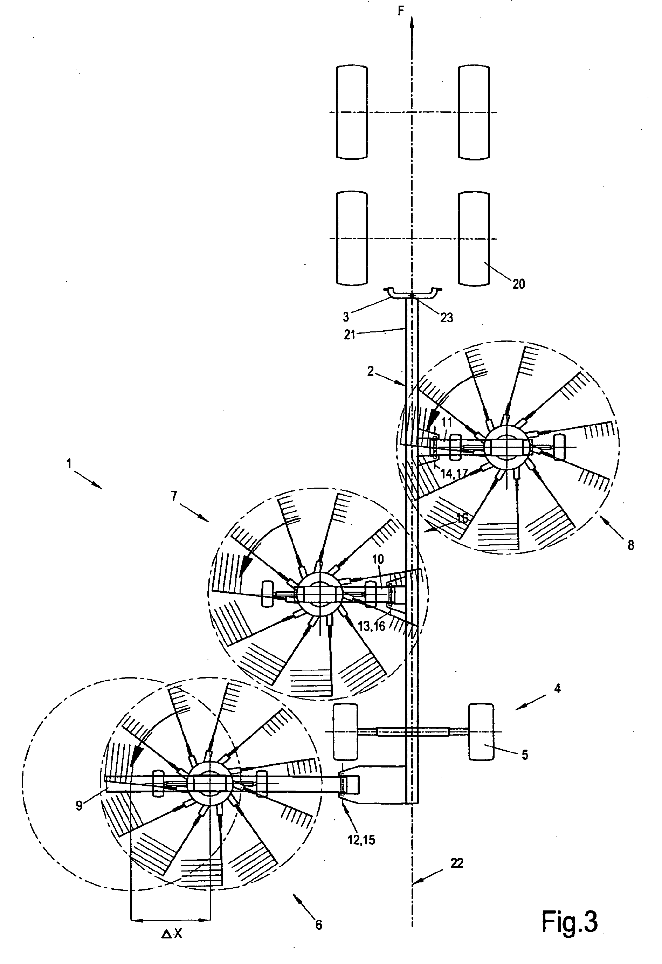

**Fig. 3** zeigt den Kreiselschwader gemäß Fig.2 in einer Draufsicht in einer Zwischenstellung des hinteren Rechkreisels 6 zu dessen Überführung in die Transportstellung. Dazu ist der hintere Rechkreisel 6 mit dem Ausleger 9 mittels einer Schlitten-Schiebeführung an diesem angelenkt, so dass der Rechkreisel mit einem nicht dargestellten Antriebselement, z.B. mit einem Hydraulikzylinder quer zur Fahrtrichtung F verrückt und damit näher an den deichselbildenden Längsträger 21 herangerückt werden kann. Der hintere Rechkreisel ist in der Darstellung der Fig.3 in Bezug auf seine Arbeitstellung gemäß Fig. 1 um einen Längenbetrag ΔX näher an den Längsträger 21, bzw. an die vertikale Längsmittelebene 22 herangerückt worden. Durch die Verrückung des Rechkreisels 6 wird das erforderliche Drehmoment während des Hochklappens des Rechkreisels 6 um seine Klappachse 12 gemindert, welches sich günstig auf die nicht dargestellte Hubvorrichtung des Klappantriebs auswirkt. Die Klappantriebe der Rechkreisel 6,7,8 werden vorzugsweise als Hydraulikzylinder ausgebildet, wie sie aus dem Stand der Technik hinreichend bekannt sind.

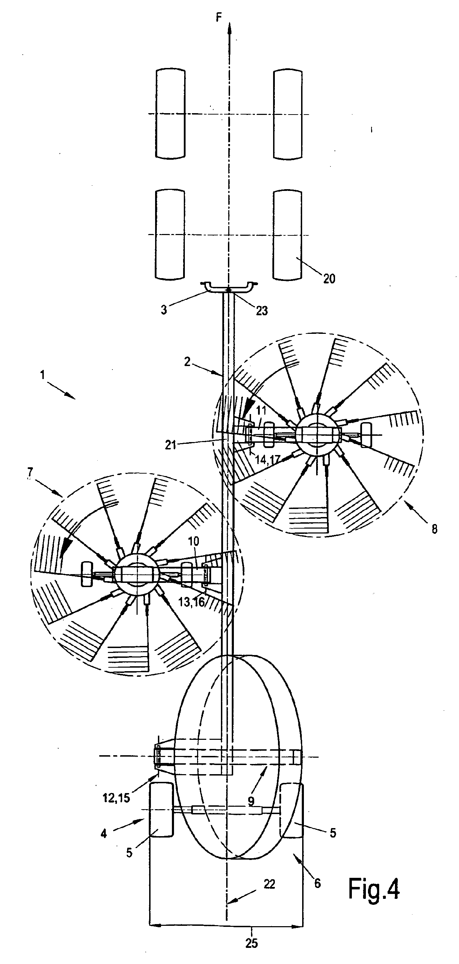

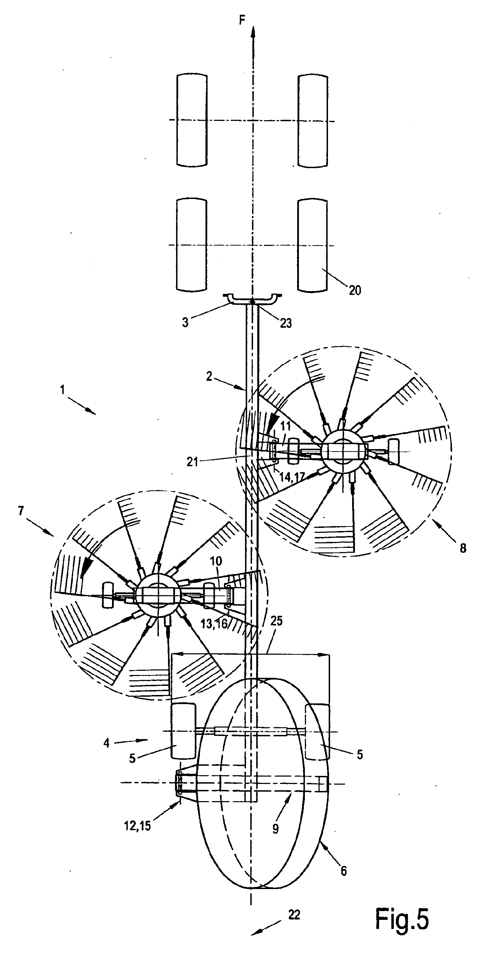

**Fig. 4** und **Fig. 5** zeigen den Kreiselschwader gemäß Fig.1 bzw. Fig. 2 in einer Draufsicht mit hochgeklapptem hinteren Rechkreisel in dessen Transportstellung, wohingegen die Rechkreisel 6,7 sich noch am Boden in der Arbeitsstellung befinden. Der hochgeklappte Rechkreisel 6 befindet sich dabei oberhalb des Fahrwerks 4 und was seine Projektion auf die Aufstandfläche des Bodens anbetrifft, befindet er sich größtenteils auch zwischen den beabstandeten Stützrädern 5 des Fahrwerks 4. Dieses ermöglicht ein besonders breites Fahrwerk 4 mit einer voll ausgeschöpften Transportbreite 25, welche die zulässige Transportbreite des Straßentransportprofils voll ausschöpfen kann.

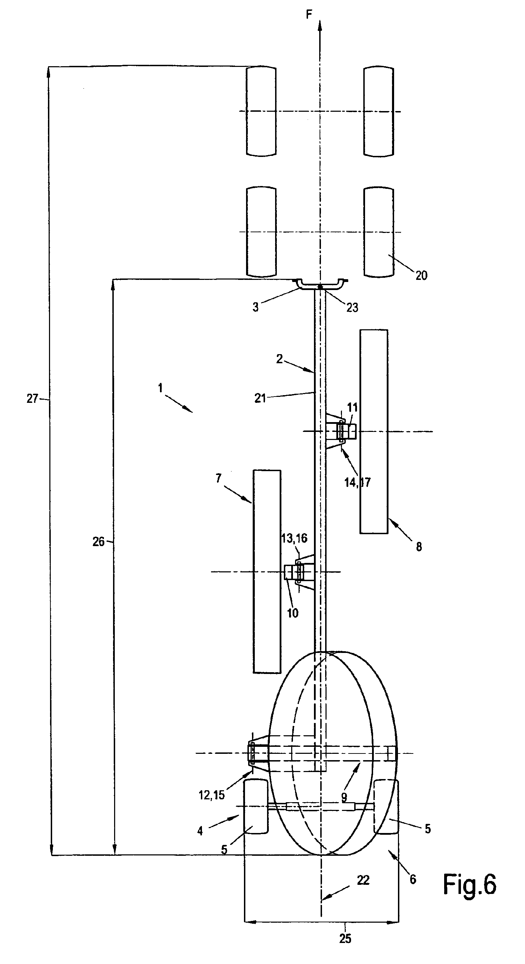

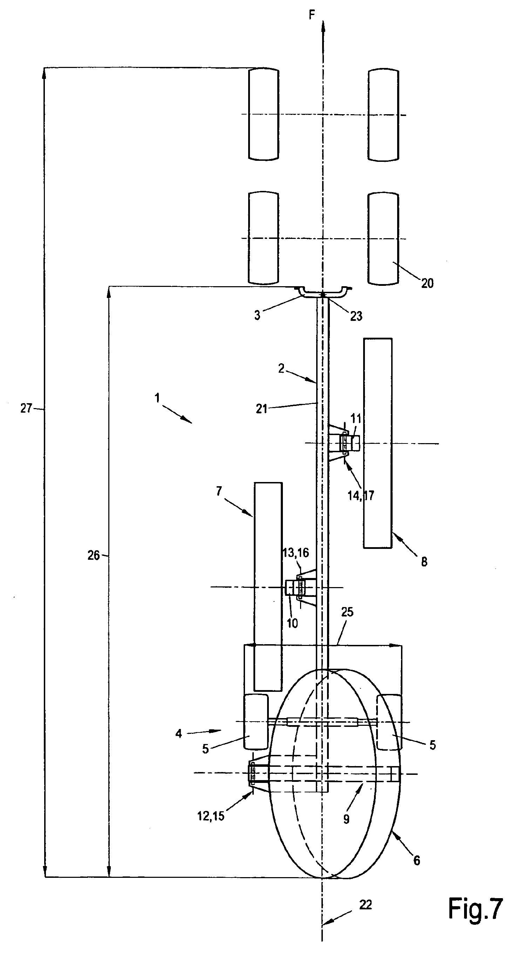

**Fig. 6** und **Fig. 7** zeigen die Kreiselschwader gemäß Fig. 1 bzw. Fig.2 in einer Draufsicht mit allen hochgeklappten Rechkreiseln in deren Transportstellung.

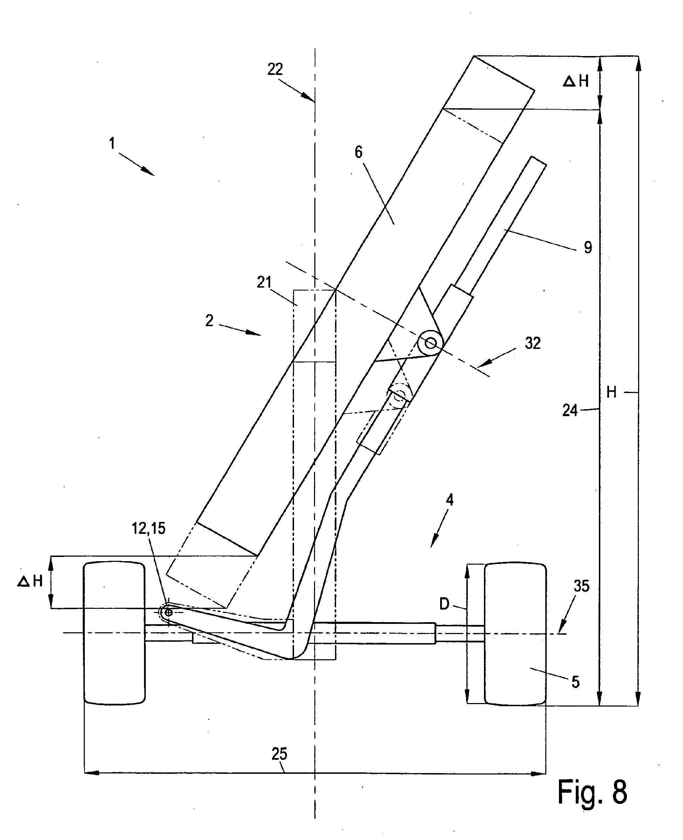

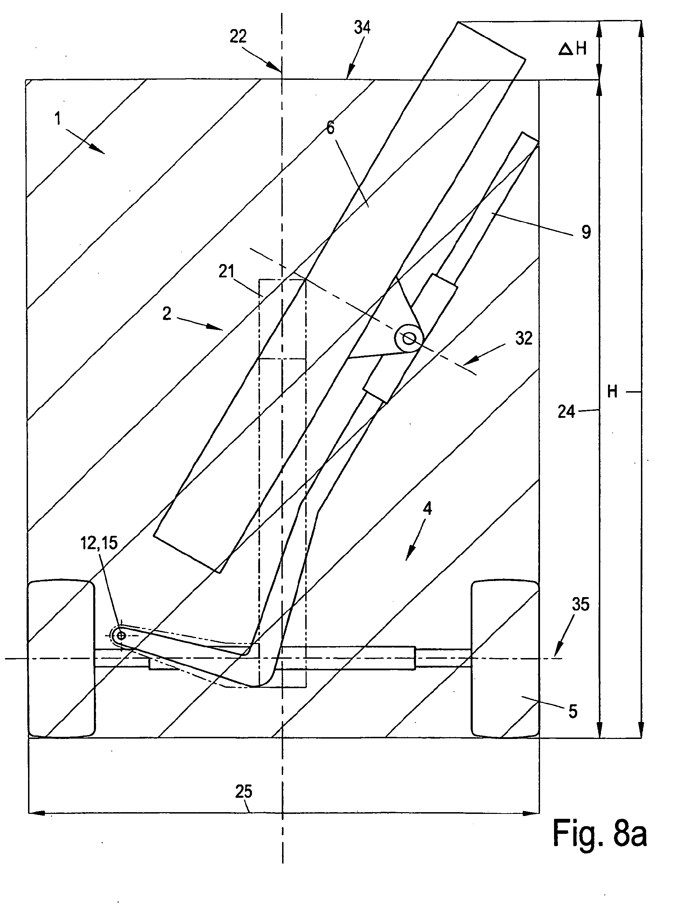

**Fig. 8** und **Fig. 8a** zeigen den hinteren Rechkreisel gemäß Fig.2 in der noch nicht endgültig abgesenkten Transportstellung mit der Höhe H,24 in einer Ansicht von hinten mit Blickrichtung in Fahrtrichtung gesehen. Fig. 8a zeigt dabei den hinteren Rechkreisel gemäß Fig.8 umrahmt durch die Grenzen eines gedachten Straßentransportprofils 34, welches zugleich durch eine Schraffur gekennzeichnet ist. Falls der Raddurchmesser D des Stützrades 5 dem ungehinderten Klappvorgang im Wege ist kann der Rechkreisel 6 in einer angehobenen Zwischenstellung über das Stützrad 5 hinweggehoben werden und anschließend weiter um einen Höhendifferenz X in seine endgültige Transportstellung der Transportposition abgesenkt werden.

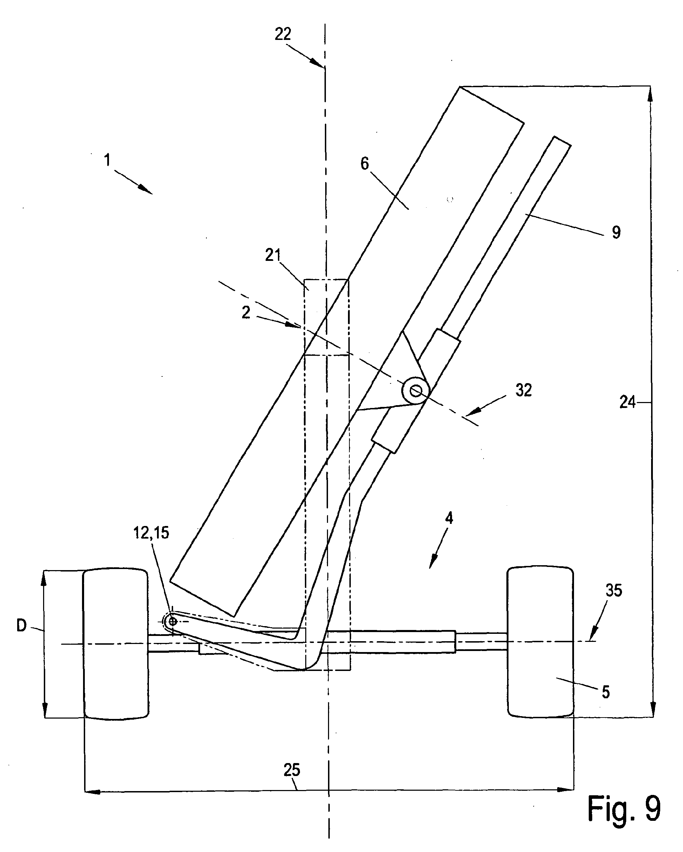

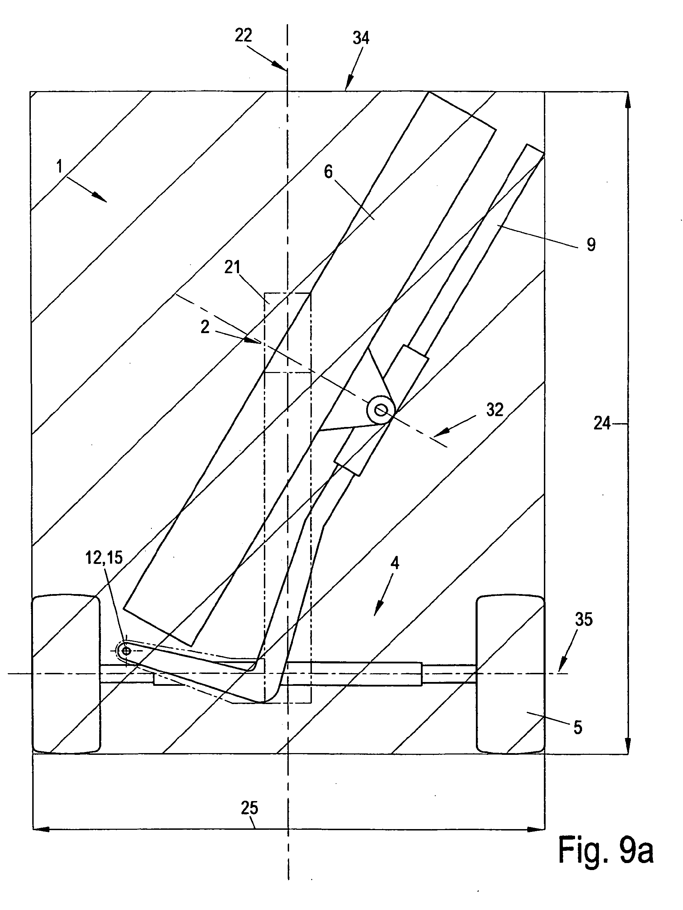

**Fig. 9** und **Fig. 9a** zeigen den hinteren Rechkreisel gemäß Fig.8 in der endgültigen abgesenkten Transportstellung. Dabei zeigt Fig. 9a den hinteren Rechkreisel gemäß Fig.9 eingerahmt durch die Grenzen eines gedachten Straßentransportprofils 34, welches zugleich durch eine Schraffur gekennzeichnet ist.

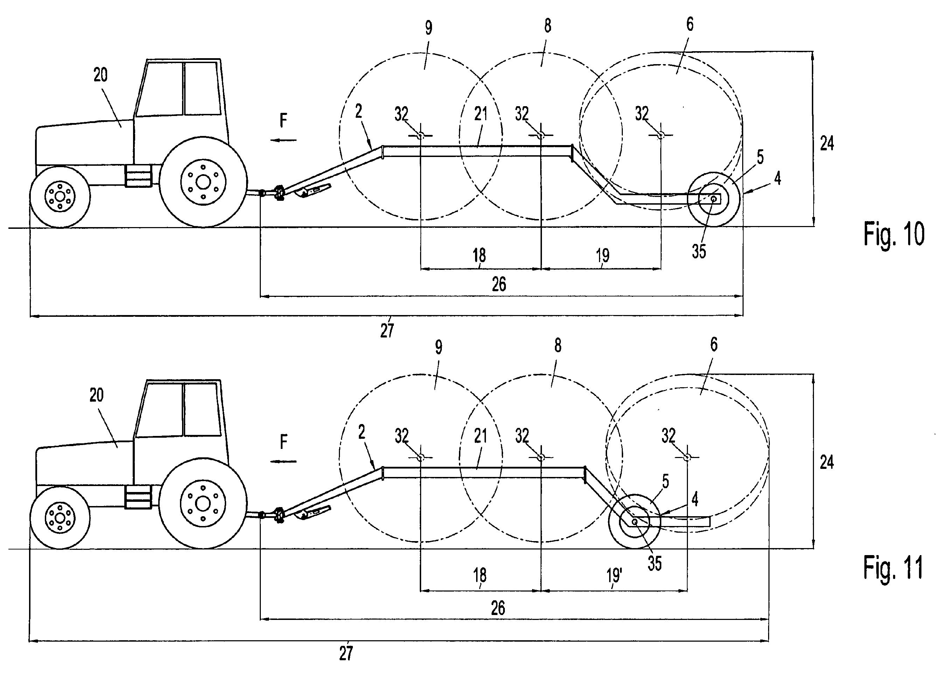

Fig.10 und Fig. 11 zeigen die Seitenschwader gemäß Fig.1 und Fig. 2 in einer Seitenansicht in der endgültigen Transportstellung. In Fig. 10 befindet sich die Kreiselachse 32 des Rechkreisels 6 in Fahrtrichtung F gesehen vor der Achse 35 und in Fig. 11 hinter der Achse 35 der Stützräder 5 des Fahrwerks 4. Erfindungsgemäß bestimmen somit nicht die Laufräder 5 des Fahrwerks 4 die Maschinenlänge 26 und damit die Gespannlänge 27, sondern diese ist durch den Durchmesser des Konturenkreises 33 des hinteren Rechkreisels 6 festgelegt. Hingegen kann die maximale Transporthöhe 24 des Kreiselschwaders 1 durch die etwa senkrecht hochgestellten Rechkreisel 7,8 bestimmt werden, indem der hintere Rechkreisel 6 oberhalb des Fahrwerks 4 und teilweise zwischen den Stützrädern 5 seine Transportlage einnimmt, welches erfindungsgemäß zu einer kompakten und kurzen Baulänge, d.h. der Maschinenlänge 26 bzw. Gespannlänge 27 führt und wobei die Lage des Fahrwerks 4 gleichzeitig näher an das Zugfahrzeug 20 herangerückt werden kann. Dieses ermöglicht zudem einen großen Abstand der Stützräder 5 des Fahrwerks 4, so dass sogar der größtmögliche Abstand der Stützräder 5 zueinander durch die maximal zulässige Transportbreite des Straßenquerschnittprofils 34 definiert werden und voll ausgeschöpft werden kann.

### Bezugszeichenliste

- 1: Kreiselschwader
- 2: Fahrgestell
- 3: Kupplungsvorrichtung
- 4: Fahrwerk
- 5: Stützrad
- 6: hinterer Schwadkreisel
- 7: mittlerer Schwadkreisel
- 8: vorderer Schwadkreisel
- 9: hintere Ausleger
- 10: mittlerer Ausleger
- 11: vorderer Ausleger
- 12: Klappachse
- 13: Klappachse
- 14: Klappachse
- 15: Klappgelenk
- 16: Klappgelenk
- 17: Klappgelenk
- 18: Abstandsmaß
- 19,19': Abstandsmaß
- 20: Zugfahrzeug
- 21: deichselbildender Längsträger
- 22: vertikale Längsmittelebene
- 23: Vertikalgelenk
- 24: Transporthöhe
- 25: Transportbreite
- 26: Maschinenlänge
- 27: Gespannlänge
- 28: gedachtes rechtwinkeliges Dreieck
- 29: Kathete
- 30: Kathete
- 31: Hypotenuse
- 32: Kreiselachse
- 33: Konturenkreis
- 34: zulässiges Querschnittsprofil für den Straßentransport
- 35: Stützradachse
- A: Eckpunkt
- B: Eckpunkt
- C: Eckpunkt
- D: Raddurchmesser
- F: Fahrtrichtung
- H: Höhe
- ΔH: Höhendifferenz
- ΔX: Längenbetrag

## Patentansprüche

1. Heuwerbungsmaschine insbesondere Seitenschwader zum Zusammenrechen von am Boden liegendem Erntegut, mit drei quer zur Fahrtrichtung zueinander versetzten um etwa vertikale Achsen umlaufend antreibbare am Boden durch Laufräder abgestützte Rechkreisel, die in Fahrtrichtung hintereinander gestaffelt und an Auslegern geführt, gelenkig und höhenbeweglich angeordnet sind, wobei die Ausleger in Klappgelenken mit etwa in Fahrtrichtung verlaufenden Schwenkachsen mit einem deichselbildenden Längsträger als Teil eines Fahrgestells verbunden sind, und diese durch Hochschwenken aus einer Arbeitsstellung in eine Transportstellung verschwenkbar sind, wobei das Fahrgestell eine Kupplungsvorrichtung zum ankoppeln an ein Zugfahrzeug und ein Fahrwerk mit wenigstens zwei Stützrädern aufweist, **dadurch gekennzeichnet, dass** der vordere Rechkreisel (8) auf der einen und die übrigen Rechkreisel (6, 7) auf der anderen Seite des deichselbildenden Längsträgers (21) angeordnet sind, und der hintere hochgeklappte Rechkreisel (6) sich dabei oberhalb des Fahrwerks (4) befindet und seine Projektion auf die Aufstandfläche des Bodens größtenteils zwischen den beabstandeten Stützrädern (5) des Fahrwerks (4) liegt und der hintere Rechkreisel (6) in der Transportstellung zumindest einen Teil des Raumes zwischen und oberhalb der Stützräder (5) einnimmt, wobei der Rechkreisel (6) in einer angehobenen Zwischenstellung über eine Stützrad (5) des Fahrweks (4) hinweggehoben und anschließend um eine Höhendifferenz (X) in seine endgültige Transportstellung der Transportposition abgesenkt wird.

2. Heuwerbungsmaschine nach Anspruch 1 , **dadurch gekennzeichnet, dass** der vorgelagerte mittlere Rechkreisel (7) in seiner Transportposition relativ zur vertikalen Längsmittelebene (22) weiter von dieser beabstandet ist, als der hintere Rechkreisel (6).

3. Heuwerbungsmaschine nach Anspuch 1 und 2, **dadurch gekennzeichnet, dass** die Reihenfolge des Hochklappens in die Transportposition vom mittleren Rechkreisel (7) und hinteren Rechkreisel (6) so abläuft, dass der hintere Rechkreisel (6) zeitlich gesehen vor dem mittleren Rechkreisel (7) hochgeklappt wird.

4. Heuwerbungsmaschine nach Anspruch 1 und 2, **dadurch gekennzeichnet, dass** die Reihenfolge des Herunterklappens in die Arbeitsposition vom mittleren Rechkreisel (7) und hinteren Rechkreisel (6) so abläuft, dass der hintere Rechkreisel (6) zeitlich gesehen nach dem mittleren Rechkreisel (7) heruntergeklappt wird.

5. Heuwerbungsmaschine nach einem oder mehreren der Ansprüche 1 bis 4, **dadurch gekennzeichnet, dass** der vorgelagerte mittlere Rechkreisel (7) in seiner Arbeitsposition relativ zur vertikalen Längsmittelebene (22) geringer von dieser beabstandet ist, als der hintere Rechkreisel (6).

## Claims

1. A haymaking machine, in particular a side swather for raking together crop material lying on the ground, comprising three rotary rakes which are displaced transversely relative to the direction of travel with respect to each other and which are drivable in rotation about substantially vertical axes and which are supported on the ground by wheels and which are staggered in successive relationship in the direction of travel and are guided and arranged pivotably and movably in respect of height on cantilever arms, wherein the cantilever arms are connected at folding pivots with pivot axes extending substantially in the direction of travel, with a shaft-forming longitudinal bearer as part of a chassis, and same are pivotable by upward pivotal movement out of a working position into a transport position, wherein the chassis has a coupling device for coupling to a tractor vehicle and a chassis unit having at least two support wheels, **characterised in that** the front rotary rake (8) is arranged on one side of the shaft-forming longitudinal bearer (21) and the other rotary rakes (6, 7) are arranged on the other side thereof, and the rear upwardly pivoted rotary rake (6) **in that** case is disposed above the chassis unit (4) and its projection on to the contact surface on the ground is for the major part between the spaced support wheels (5) of the chassis unit (4) and the rear rotary rake (6) in the transport position occupies at least a part of the space between and above the support wheels (5), wherein the rotary rake (6) in a raised intermediate position is lifted beyond a support wheel (5) of the chassis unit (4) and then lowered by a height difference (X) into its definitive transport configuration of the transport position.

2. A haymaking machine according to claim 1 **characterised in that** the forwardly disposed central rotary rake (7) in its transport position relative to the vertical longitudinal central plane (22) is spaced further therefrom than the rear rotary rake (6).

3. A haymaking machine according to claim 1 and claim 2 **characterised in that** the sequence of upward pivotal movement into the transport position of the central rotary rake (7) and the rear rotary rake (6) takes place in such a way that the rear rotary rake (6) is pivoted upwardly before the central rotary rake (7) in relation to time.

4. A haymaking machine according to claim 1 and claim 2 **characterised in that** the sequence of downward pivotal movement into the working position of the central rotary rake (7) and the rear rotary rake (6) takes place in such a way that the rear rotary rake (6) is pivoted downwardly after the central rotary rake (7) in relation to time.

5. A haymaking machine according to one or more of claims 1 to 4 **characterised in that** the forwardly disposed central rotary rake (7) in its working position relative to the vertical longitudinal central plane (22) is spaced by a lesser distance therefrom than the rear rotary rake (6).

## Revendications

1. Machine de fenaison, en particulier andaineur latéral pour râteler du produit récolté couché sur le sol, comprenant trois toupies qui sont décalées les unes par rapport aux autres transversalement au sens de la marche, qui peuvent être entraînées en rotation autour d'axes sensiblement verticaux et prennent appui sur le sol par l'intermédiaire de roues de roulement et qui sont échelonnées les unes derrière les autres dans le sens de la marche et sont disposées de manière articulée et mobile en hauteur en étant guidées sur des bras, les bras étant reliés, dans des articulations de repliage à axes de pivotement sensiblement orientés dans le sens de la marche, avec un longeron formant timon et faisant partie d'un châssis, et ces bras pouvant passer en se relevant d'une position de travail à une position de transport, le châssis comportant un dispositif d'attelage pour l'atteler à un véhicule tracteur et un train de roulement avec au moins deux roues d'appui, **caractérisée en ce que** la toupie avant (8) est disposée d'un côté du longeron formant timon (21) et les autres toupies (6, 7) sont disposées de l'autre côté du longeron formant timon, et la toupie arrière (6) relevée se trouvant au-dessus du train de roulement (4) et sa projection sur la surface d'appui au sol se trouvant en grande partie entre les roues d'appui distantes (5) du train de roulement (4), et la toupie arrière (6) occupant dans la position de transport au moins une partie de l'espace situé entre et au-dessus des roues d'appui (5), la toupie (6) étant, dans sa position intermédiaire soulevée, passée au-delà d'une roue d'appui (5) du train de roulement (4) et étant ensuite, dans son positionnement de transport définitif de la position de transport, descendue d'une différence de hauteur (X).

2. Machine de fenaison selon la revendication 1, **caractérisée en ce que**, dans sa position de transport, la toupie intermédiaire avancée (7) est plus éloignée du plan médian longitudinal vertical (22) que la toupie arrière (6).

3. Machine de fenaison selon les revendications 1 et 2, **caractérisée en ce que** la séquence de relevage en position de transport de la toupie intermédiaire (7) et de la toupie arrière (6) se déroule de façon que, chronologiquement, la toupie arrière (6) soit relevée avant la toupie intermédiaire (7).

4. Machine de fenaison selon la revendication 1 ou 2, **caractérisée en ce que** la séquence d'abaissement en position de travail de la toupie intermédiaire (7) et de la toupie arrière (6) se déroule de façon que, chronologiquement, la toupie arrière (6) soit abaissée après la toupie intermédiaire (7).

5. Machine de fenaison selon une ou plusieurs des revendications 1 à 4, **caractérisée en ce que**, dans sa position de travail, la toupie intermédiaire avancée (7) est moins éloignée du plan médian longitudinal vertical (22) que la toupie arrière (6).
